# EUROPÄISCHE PATENTSCHRIFT

(11) **EP 3 338 527 B1**
(45) Veröffentlichungstag und Bekanntmachung des Hinweises auf die Patenterteilung: **25.12.2019**
(21) Anmeldenummer: 17186235.2
(22) Anmeldetag: 15.08.2017
(51) Int. Cl.: A01D 41/12, A01B 73/04

(54) **MÄHDRESCHER**
COMBINE HARVESTER
MOISSONNEUSE-BATTEUSE

(30) Priorität: 20.12.2016 DE 102016125000
(43) Veröffentlichungstag der Anmeldung: 27.06.2018
(73) Patentinhaber: CLAAS Selbstfahrende Erntemaschinen GmbH, 33428 Harsewinkel (DE)
(72) Erfinder: Knierbein, Claudius, 59510 Lippetal-Herzfeld (DE); Vieregge, Christopher, 32694 Dörentrup (DE); Schiewer, Stefan, 48231 Warendorf (DE)
(74) Vertreter: CLAAS Gruppe

(56) Entgegenhaltungen:
- EP-A1- 0 635 198
- EP-A1- 1 897 430
- EP-A1- 3 033 937
- EP-A2- 2 298 061
- US-A1- 2013 324 199

## Beschreibung

Die vorliegende Erfindung betrifft einen Mähdrescher gemäß dem Oberbegriff des Anspruches 1.

Mit zunehmender Arbeitsbreite von selbstfahrenden Mähdreschern steigen die Anforderungen an eine an die Arbeitsbreite angepasste Ausbringung des aus Nichtkornbestandteilen bestehenden Erntegutes. Es wird eine gleichmäßige Verteilung des Erntegutes über die gesamte, durch das jeweils zum Einsatz kommende Vorsatzgerät, bestimmte Arbeitsbreite angestrebt. Hierzu weisen die Mähdrescher als angetrieben Radialverteiler ausgeführte Verteilvorrichtungen auf, welchen das zu verteilende Erntegut von einer Häckselvorrichtung zugeführt wird.

Die EP 2 298 061 A2 beschreibt einen Mähdrescher mit einer Verteilvorrichtung. Um auch große Arbeitsbreiten abdecken zu können, umfasst der Mähdrescher eine einer Häckselvorrichtung nachgeordnete, durch zumindest einen Antriebsstrang angetriebene Verteilvorrichtung, welche zwei rotierend angetriebene Fördereinrichtungen aufweist. Die beiden Fördereinrichtungen nehmen einen aus der Häckselvorrichtung austretenden Erntegutstrom an und lenken diesen nach außen um. Dabei wird der Erntegutstrom von der jeweiligen Fördereinrichtung einer dieser nachgeordneten, um eine zur Längsachse des Mähdreschers parallele Schwenkachse verschwenkbaren Verteileinrichtung zugeführt. Die Verteileinrichtungen sind aus ihrer Betriebsposition in eine um einen Winkel von 90° um ihre Schwenkachse geschwenkte Transportposition überführbar. In dieser Transportposition stehen die Verteileinrichtungen senkrecht zu der jeweiligen Fördereinrichtung.

Diese Transportposition der Verteileinrichtungen kann hinsichtlich der Einhaltung der zulässigen Gesamtbreite des Mähdreschers problematisch sein. Insbesondere treten jedoch aufgrund dieser Transportposition der Verteilelemente beim Bewegen des Mähdreschers Kräfte auf, die von den Halterungen der Verteileinrichtungen aufgenommen werden müssen. Hierfür sind die Halterungen bzw. die Aktorik zum Überführen von der Betriebsposition in die Transportposition und zurück entsprechend zu dimensionieren, um eine Sicherung der Transportposition zu gewährleisten. Dies geht mit einer entsprechenden Gewichtszunahme der Verteilvorrichtung und damit einer Zunahme des Gesamtgewichts des Mähdreschers einher.

Die US 2013/0324199 A1 beschreibt einen Mähdrescher mit einer Verteilvorrichtung gemäß dem Oberbegriff des Anspruchs 1.

Daher ist es die Aufgabe der vorliegenden Erfindung, einen Mähdrescher der eingangs genannten Art bereitzustellen, dessen Verteilvorrichtung in ihrer Transportposition eine Einhaltung der zulässigen Gesamtbreite sicherstellt und sich zudem durch einen einfachen und leichteren Aufbau auszeichnet.

Diese Aufgabe wird erfindungsgemäß durch die Merkmale des Anspruches 1 geöst.

Vorteilhafte Weiterbildungen sind Gegenstand der Unteransprüche.

Gemäß dem Anspruch 1 wird ein Mähdrescher mit einer Häckselvorrichtung und einer dieser nachgeordneten, durch zumindest einen Antriebsstrang angetriebenen, Verteilvorrichtung, welche rotierend angetriebene Fördereinrichtungen umfasst, die einen aus der Häckselvorrichtung austretenden Erntegutstrom annehmen und umlenken, um den Erntegutstrom einer der jeweiligen Fördereinrichtung nachgeordneten, mittels einer Aktorik um eine zur Längsachse des Mähdreschers parallele Schwenkachse verschwenkbaren Verteileinrichtung zuzuführen, vorgeschlagen. Die Verteileinrichtungen des Mähdreschers sind durch Schwenken um ihre Schwenkachse aus zumindest einer Betriebsposition in eine Transportposition und umgekehrt überführbar, in der die Verteileinrichtungen eine parallele oder nahezu parallele Anordnung oberhalb der jeweiligen Fördereinrichtung einnehmen, ohne den Antriebsstrang zwischen den Fördereinrichtungen und den Verteileinrichtungen zu unterbrechen. Wegen der parallelen oder nahezu parallelen Anordnung der jeweiligen Verteileinrichtung oberhalb der jeweiligen Fördereinrichtung muss die Aktorik lediglich derart ausgebildet sein, dass sie die jeweilige Verteileinrichtung in die Transportposition überführen und in dieser halten kann. Das Halten in dieser Transportposition wird dabei durch die parallele oder nahezu parallele Anordnung oberhalb der jeweiligen Fördereinrichtung unterstützt, da die Fördereinrichtungen der Ablage dienen können. In der Transportposition der Verteileinrichtungen kommt der Aktorik im Wesentlichen die Aufgabe zu, ein Aufschwingen zu verhindern. Im Gegensatz zum Stand der Technik bedarf es nicht des aufwendigen Kompensierens von auf die Verteileinrichtungen einwirkenden dynamischen Kräften in der Transportposition, insbesondere während der Straßenfahrt des Mähdreschers.

Unter Betriebspositionen der Verteileinrichtungen sind die Positionen zu verstehen, welche die Verteilvorrichtung und mit dieser die Fördereinrichtungen und die diesen nachgeordneten Verteileinrichtungen gegenüber der Häckselvorrichtung einnehmen können, wenn gehäckseltes Erntegut über die Arbeitsbreite des Mähdreschers hinweg ausgebracht werden soll oder ungehäckseltes Stroh, welches von einer Abscheidevorrichtung eines Mähdreschers unter Umgehung der Häckselvorrichtung und der Verteilvorrichtung abgegeben wird, in Form eines Schwads auf dem Boden abgelegt werden soll.

Der Mähdrescher ist dadurch gekennzeichnet, dass die jeweilige Verteileinrichtung um einen Winkel von größer 170°, insbesondere 180°, in Richtung der Längsachse des Mähdreschers schwenkbar ist. Dadurch ist gewährleistet, dass sich der Schwerpunkt der Verteileinrichtung in ihrer Transportstellung oberhalb der Fördereinrichtungen befindet. In ihrer Betriebsposition sind sie bevorzugt jeweils neben einer Fördereinrichtung angeordnet.

Besonders vorteilhaft ist es, wenn der Antriebsstrang der Verteilvorrichtung in Transportposition der Verteileinrichtungen verbunden bleibt. Das heißt, bei einem Wechsel der Verteilvorrichtungen zwischen einer der Betriebspositionen und der Transportposition ist ein Auftrennen des Antriebsstranges nicht erforderlich. Ebenso entfällt natürlich das Schließen des Antriebsstranges, um die Verteilvorrichtung von der Transportposition in eine der Betriebspositionen überführen zu können. Auf diese Weise wird das Überführen zwischen einer der Betriebspositionen und der Transportposition der Verteilvorrichtungen vereinfacht. Da das Überführen der Verteileinrichtungen aus der zumindest einen Betriebsposition in die Transportposition und zurück ohne eine Unterbrechung des Antriebsstrangs realisierbar ist, ist der Aufwand hierfür für eine Bedienperson äußerst gering. Ein manueller Eingriff einer Bedienperson zum Auftrennen des Antriebsstrangs, beispielsweise durch Lösen einer Kupplung, insbesondere einer Klauenkupplung, um den Antriebsstrang zwischen den Fördereinrichtungen und den Verteileinrichtungen zu unterbrechen, ist nicht erforderlich. Ebenso entfällt ein manueller Eingriff zum Schließen des Antriebsstrangs Daraus ergibt sich zudem der Vorteil, dass auf aufwendige Maßnahmen zum Schutz der geöffneten Kupplungshälften vor Verschmutzung und sonstigen äußeren Einflüssen verzichtet werden kann.

Hierzu kann in den Antriebsstrang der Verteilvorrichtung zumindest zwischen der jeweiligen Fördereinrichtung und der dieser nachgeordneten Verteileinrichtung ein Kraftübertragungsmittel angeordnet sein, welches während des Überführens und in der Transportposition eine Aufrechterhaltung des Kraftflusses bewirkt. Somit befinden sich die Verteileinrichtungen in einem definierten Betriebszustand, dadurch kann ein unkontrolliertes Nachlaufen der Verteileinrichtungen nach einem Abschalten einer dem Antrieb der Verteilvorrichtung dienenden Antriebseinheit vermieden werden. In der Transportposition können sich die Verteileinrichtungen nicht bewegen.

Dazu kann der Antriebsstrang zumindest zwischen der jeweiligen Fördereinrichtung und der jeweils nachgeordneten Verteileinrichtung mechanisch ausgebildet sein. Besonders vorteilhat ist es, wenn der komplette Antriebstrang der Verteilvorrichtung mechanisch ausgebildet ist.

Hierzu kann das Kraftübertragungsmittel als eine Gelenkwelle ausgebildet sein. Eine Gelenkwelle ermöglicht die Aufrechterhaltung des Kraftflusses auch bei einer Überführung in die Transportposition, so dass die Verteileinrichtungen einen definierten Betriebszustand einnehmen. Dabei zeichnet sich die Gelenkwelle durch einen relativ geringen Bauraumbedarf aus. Darüber hinaus ist die Gelenkwelle verschleiß- und wartungsarm. Es bedarf zudem keines besonderen Schutzes vor einer Verschmutzung oder sonstigen äußeren Einflüssen.

Alternativ kann das Kraftübertragungsmittel als eine Fingerkupplung ausgebildet sein. Auch die Fingerkupplung zeichnet sich durch einen relativ geringen Bauraumbedarf aus.

Insbesondere kann zur wechselweisen Überführung zwischen der zumindest einen Betriebsposition und der Transportposition der jeweiligen Verteileinrichtung eine elektrisch, elektro-mechanisch oder hydraulisch betätigte Aktorik vorgesehen sein. Bevorzugt ist die Aktorik als jeweils ein Hydraulikzylinder ausgebildet, dessen Speisung durch einen Hydraulikkreislauf des Mähdreschers erfolgt.

Vorteilhaft ist es, wenn eine Steuerungsvorrichtung vorgesehen ist, welche dazu eingerichtet ist, die Aktorik in der Weise anzusteuern, dass die jeweilige Verteileinrichtung wechselweise zwischen der zumindest einen Betriebsposition und der Transportposition überführt wird. Die Steuerungsvorrichtung kann Teil einer Regelungs- und Steuerungseinrichtung des Mähdreschers sein, welche von einer Bedienperson bedienbar ist. Das Überführen der Verteileinrichtung von der zumindest einen Betriebsposition in die Transportposition kann von der Steuerungsvorrichtung automatisiert angesteuert werden, wenn durch die Bedienperson durch eine entsprechende Eingabe in die Regelungs- und Steuerungseinrichtung des Mähdreschers ein so genannter Straßenfahrmodus aktiviert wird. Umgekehrt gilt bei einer Deaktivierung des Straßenfahrmodus entsprechendes. Darüber hinaus ist auch eine manuelle Ansteuerung zum Wechseln zwischen der zumindest einen Betriebsposition und der Transportposition durch die Steuerungsvorrichtung vorgesehen.

Insbesondere kann die Steuerungsvorrichtung zur Ansteuerung der Aktorik eingerichtet sein, um die Verteilvorrichtung in eine Verteilposition zu überführen. In der Verteilposition ist die Verteilvorrichtung zur Abgabeöffnung der Häckselvorrichtung derart ausgerichtet, dass ein im Wesentlichen tangentialer Übergang des gehäckselten Erntegutes von der Häckselvorrichtung zu den Fördereinrichtungen der Verteilvorrichtung stattfindet.

Des Weiteren kann die Steuerungsvorrichtung dazu eingerichtet sein, die Aktorik derart anzusteuern, dass die jeweilige Verteileinrichtung in eine Schwadablageposition als weitere Betriebsposition überführt wird. In der Schwadablageposition wird Stroh unter Umgehung der Häckselvorrichtung auf dem Boden in Form eines Schwads abgelegt. Dazu nimmt die Verteilvorrichtung eine zur Häckselvorrichtung nach unten geneigte Position ein, um das Stroh entlang der Oberseite der Verteilvorrichtung auf den Boden gleiten zu lassen. Die Verteileinrichtungen werden zu diesem Zweck in eine Position überführt, in welcher sie im Wesentlichen senkrecht zu den sich in der Horizontalen befindlichen Fördereinrichtungen stehen.

Die vorliegende Erfindung wird nachstehend anhand von in den Zeichnungen dargestellten Ausführungsbeispielen näher erläutert.

Es zeigen:
- Fig. 1: eine schematisierte Seitenansicht eines Mähdreschers;
- Fig. 2: eine perspektivische Ansicht einer Verteilvorrichtung in einer Betriebsposition;
- Fig. 3: eine Ansicht der Verteilvorrichtung gemäß Fig. 2 von schräg unten;
- Fig. 4: eine schematische Teilansicht der Verteilvorrichtung in einer weiteren Betriebsposition;
- Fig. 5: eine schematische Teilansicht der Verteilvorrichtung in Transportposition.

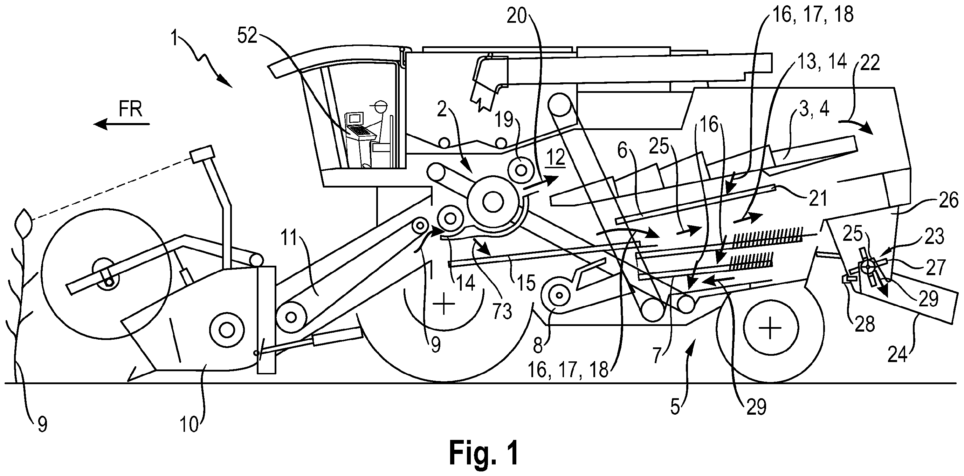

Fig. 1 zeigt die schematisierte Seitenansicht einer als Mähdrescher 1 ausgeführten Erntemaschine mit einem an sich bekannten und daher hier nicht näher beschriebenen Dreschwerk 2 und einem diesem nachgeordneten Hordenschüttler 4 als Abscheideorgan 3. Unterhalb des Hordenschüttlers 4 befindet sich eine Reinigungseinrichtung 5, bestehend aus zumindest zwei übereinander angeordneten Sieben, einem Obersieb 6 und einem Untersieb 7 und einem Reinigungsgebläse 8. Die Erfindung ist aber ausdrücklich nicht auf derartig ausgeführte Mähdreschertypen beschränkt, sondern bezieht sich beispielsweise auch auf Mähdrescher mit Axialabscheiderotoren als Abscheideorgan sowie Mähdrescher mit axial angeordneter Dresch-Trennvorrichtung.

Im vorderen Bereich ist an dem Mähdrescher 1 ein Schneidwerk 10 angeordnet, mit dem das Erntegut 9 geschnitten und aufgenommen wird. Das Schneidwerk 10 führt das Erntegut 9 einem Schrägförderer 11 zu, der frontseitig am Mähdrescher 1 angeordnet ist. Der Schrägförderer 11 übergibt das Erntegut 9 an das im Maschinengehäuse 12 angeordnete Dreschwerk 2 zum Ausdrusch. Ein überwiegend aus Körnern bestehendes Korn-Spreu-Gemisch 13 wird durch einen Dresch- und Abscheidekorb 14 des Dreschwerks 2 abgeschieden und gelangt über einen Vorbereitungsboden 15 zu der Reinigungseinrichtung 5, um die Körner 16 von den Nichtkornbestandteilen, das heißt von Halmteilen 17 und Spreu 18 zu trennen.

Im rückwärtigen Bereich des Dreschwerks 2 ist eine rotierende Wendetrommel 19 angeordnet, die den aus dem Dreschwerk 2 austretenden, im Wesentlichen aus ausgedroschenen Strohhalmen bestehenden Gutstrom 20 annimmt und dem Hordenschüttler 4 zuführt, der den Gutstrom 20 in den rückwärtigen Bereich des Mähdreschers 1 fördert. Dabei werden die noch im Gutstrom 20 befindlichen Körner 16 sowie eventuell Kurzstroh 17 und Spreu 18 abgetrennt, indem sie durch den mit Sieböffnungen versehenen Hordenschüttler 4 hindurch auf einen Rücklaufboden 21 fallen. Der Rücklaufboden 21 transportiert Körner 16, Kurzstroh 17 und Spreu 18 zum Vorbereitungsboden 15.

Die Körner 16, das Kurzstroh 17 und die Spreu 18 gelangen schließlich ebenfalls über den Vorbereitungsboden 15 in die Reinigungseinrichtung 5, in welcher die Körner 16 vom Kurzstroh 17 und von der Spreu 18 separiert werden. Das Stroh 22 wandert über den Hordenschüttler 4 zum hinteren Ende des Mähdreschers 1, wo es einer Häckselvorrichtung 23 und einer dieser zugeordneten Verteilvorrichtung 24 zugeführt werden. Die Häckselvorrichtung 23 weist unter anderem eine rotierende Häckseltrommel 25 auf, die in einem Häckslergehäuse 26 gelagert ist. Die Häckseltrommel 25 ist mit beweglichen Messern 27 besetzt, die mit im Häckslergehäuse 26 fest angeordneten Gegenmessern 28 kämmen. Mit diesen Messern 27 und den Gegenmessern 28 wird das Stroh 22 zu Häckselgut zerkleinert und beschleunigt. Ein größtenteils aus Spreu bestehender Siebüberlauf, der nicht durch das Obersieb 6 hindurch fällt, gelangt über das Obersieb 6 in den hinteren Bereich des Mähdreschers 1 und kann ebenfalls der Häckselvorrichtung 23 zugeführt werden. Der aus der Häckselvorrichtung 23 austretende, im Wesentlichen aus gehäckseltem Stroh 22 und Spreu 18 bestehende Gutstrom 29 wird an die Verteilvorrichtung 24 weiterbefördert, die den Gutstrom 29 auf dem Feld verteilt.

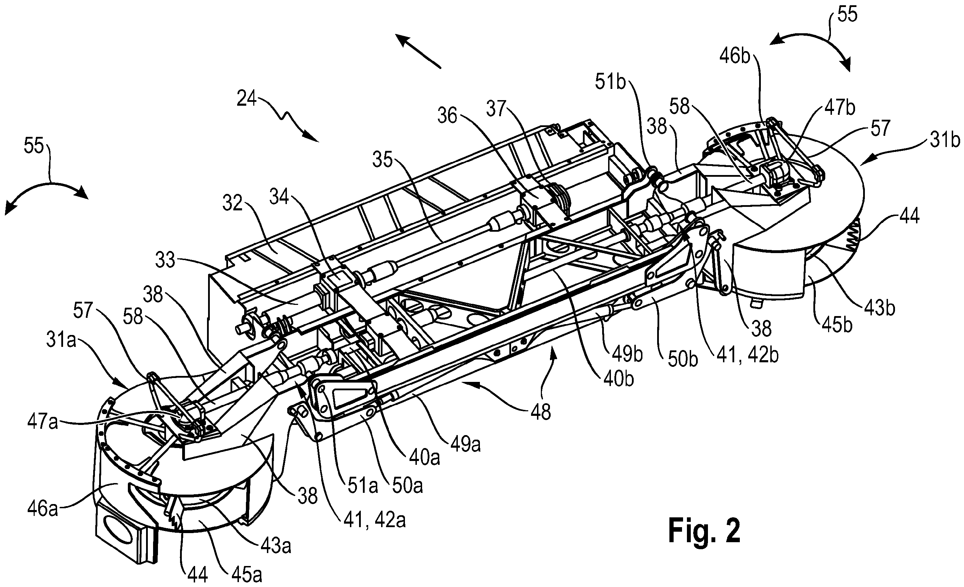

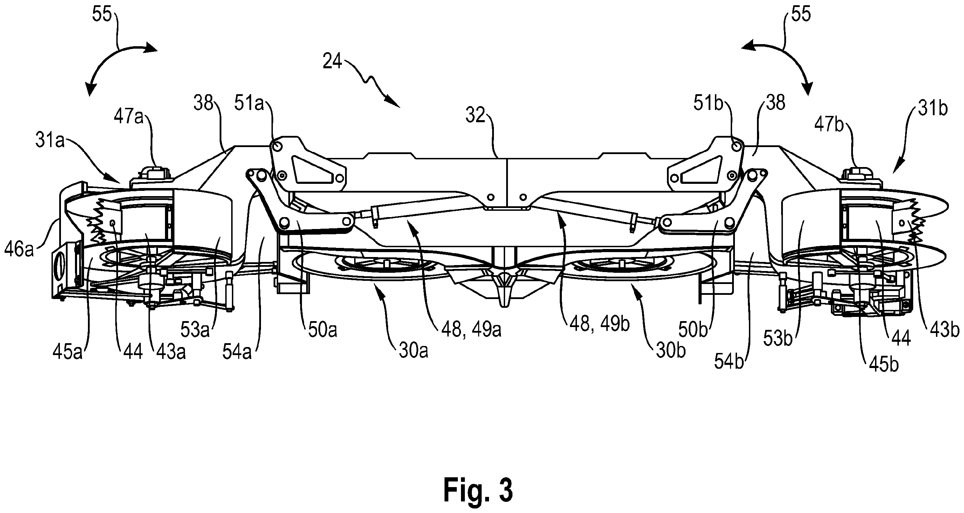

Anhand der Darstellungen in den Fig. 2 bis 5 wird die Verteilvorrichtung 24 und ihre unterschiedlichen Betriebspositionen sowie ihre Transportposition näher erläutert. In den Fig. 2 und 3 ist die Verteilvorrichtung 24 in einer Betriebsposition dargestellt, in welcher der aus gehäckseltem Stroh 22 und Spreu 18 bestehende Gutstrom 29 von dieser auf dem Boden verteilt wird. Um die durch die Breite des Schneidwerks 10 vorgegebene Arbeitsbreite des Mähdreschers 1 auch von Schneidwerken mit Arbeitsbreiten von 12 Metern oder mehr abdecken zu können, umfasst die Verteilvorrichtung 24 ein Paar rotierend angetriebene Fördereinrichtungen 30a, 30b, die in einem Rahmen 32 angeordnet sind, sowie den Fördereinrichtungen 30a, 30b nachgeordnete Verteileinrichtungen 31a, 31b. Die Breite des Rahmens 32 ist auf die Breite des Mähdreschers 1 beschränkt. Die Verteileinrichtungen 31a, 31b sind als Radialverteiler ausgebildet. In der dargestellten Betriebsposition der Verteilvorrichtung 24, der Häckselposition, ragen die Verteileinrichtungen 31a, 31b jeweils seitlich über den Mähdrescher 1 hinaus. In dieser Betriebsposition sind die Verteileinrichtungen 31a, 31b in einem Schwenkwinkel 56 von etwa 0° angeordnet. Dabei sind sie jeweils seitlich einer der Fördereinrichtungen 30a, 30b und etwa auf ihrer Höhe liegend angeordnet.

Zum Überführen der Verteileinrichtungen 31a, 31b in die verschiedenen Betriebspositionen oder die Transportposition sind die Verteileinrichtungen 31a, 31b jeweils in eine Schwenkrichtung 55 um eine Schwenkachse 51a, 51b vor und zurück schwenkbar.

Zum Antreiben der Komponenten der Verteilvorrichtung 24 ist eine Abtriebswelle 33 vorgesehen, welche mit einem Antriebsstrang des Mähdreschers 1 trieblich verbunden ist, beispielsweise durch einen Riementrieb. Die Abtriebswelle 33 mündet in einer ersten Getriebestufe 34, die als Kegelradgetriebe ausgeführt ist. Von der ersten Getriebestufe 34 geht eine sich senkrecht zur Abtriebswelle 33 nach unten erstreckende Antriebswelle ab (nicht dargestellt), die dem Antrieb des einen Förderelementes 30a der Verteilvorrichtung 24 dient. Weiterhin geht von der ersten Getriebestufe 34 eine Gelenkwelle 35 ab, die die erste Getriebestufe 34 antriebsmäßig mit einer zweiten Getriebestufe 36 verbindet. Auch von der zweiten Getriebestufe 36 geht eine weitere sich senkrecht zur Abtriebswelle 33 nach unten erstreckende Antriebswelle ab (ebenfalls nicht dargestellt), welche dem Antrieb des weiteren Förderelementes 30b der Verteilvorrichtung 24 dient. Koaxial zu der Abtriebswelle 33 ist an der zweiten Getriebestufe 36 eine Bremseinrichtung 37 angeordnet. Die Bremseinrichtung 37 dient dem Stillsetzen des Antriebsstranges der Verteilvorrichtung 24 und dem Halten in einem definierten Betriebszustand. Die Darstellungen in den Fig. 2 und 3 zeigen den Rahmen 32 der Verteilvorrichtung 24 zur Veranschaulichung der oberhalb der Fördereinrichtungen 30a, 30b angeordneten Antriebselemente nach oben hin offen, im Allgemeinen ist der Rahmen 32 ist auf seiner Oberseite durch einen Deckel verschlossen.

Die jeweilige Verteileinrichtung 31a, 31b ist jeweils mittels eines oder mehrerer Tragarme 38 um die zur Längsachse des Mähdrehschers 1 parallel verlaufende Schwenkachse 51a, 51b schwenkbar an dem Rahmen 32 angelenkt. Der Antrieb der Verteileinrichtungen 31a, 31b erfolgt ebenfalls mechanisch. Die als Radialverteiler ausgebildeten Verteileinrichtungen 31a, 31b umfassen jeweils einen um eine vertikale orientierte Drehachse rotierenden Läufer 43a, 43b, an welchem in Umfangsrichtung verteilt paddelförmige Förderelemente 44 angeordnet sind. Der Läufer 43a, 43b ist in Umfangsrichtung abschnittsweise von einer Mantelfläche 53a, 53b umschlossen. Auf ihrer Unterseite weisen die Läufer 43a, 43b jeweils eine Scheibe 45a, 45b auf. Zur Steuerung der Verteilbreite weist jede Verteileinrichtung 31a, 31b in Umfangsrichtung der Läufer 43a, 43b verstellbare Streubleche 46a, 46b auf. An die jeweilige Mantelfläche 53a, 53b schließt sich ein Kanalabschnitt 54a, 54b an, welcher den Auslassbereich des jeweiligen Förderelementes 30a, 30b mit dem Einlassbereich der jeweiligen der Verteileinrichtung 31a, 31b in der Häckselposition verbindet.

Zum Antreiben der Verteileinrichtungen 31a, 31b zweigt von der ersten Getriebestufe 34 eine zweite Abtriebswelle (nicht dargestellt) ab, welche in eine dritte Getriebestufe 39 mündet. Von der dritten Getriebestufe 39 ausgehend erstrecken sich dritte Abtriebswellen 40a, 40b seitlich in Richtung der Verteileinrichtungen 31a, 31b. An die jeweilige dritte Abtriebswelle 40a, 40b schließt sich jeweils ein als Gelenkwelle 42a, 42b ausgebildetes Kraftübertragungsmittel 41 an. Die jeweilige Gelenkwelle 42a, bzw. 42b treibt jeweils ein dem Antrieb der Läufer 43a, 43b dienendes Getriebe 47a, 47b. Zum Überführen und Halten der jeweiligen Verteileinrichtung 31a, 31b in die unterschiedlichen Betriebspositionen bzw. die Transportposition umfasst die Verteilvorrichtung eine ansteuerbare Aktorik 48. Die Aktorik 48 ist dazu als je ein Hydraulikzylinder 49a, 49b ausgeführt. Der jeweilige Hydraulikzylinder 49a, 40b greift mit einem Ende an einer Hebelanordnung 50a, 50b der jeweiligen Verteileinrichtung 31a, 31b an und ist mit seinem anderen Ende am Rahmen 32 der Verteilvorrichtung 24 verbunden. Mittels der Hebelanordnungen 50a, 50b ist die jeweilige Verteileinrichtung 31a, 31b relativ zum Rahmen 32 um die jeweilige Schwenkachse 51a, 51b schwenkbar.

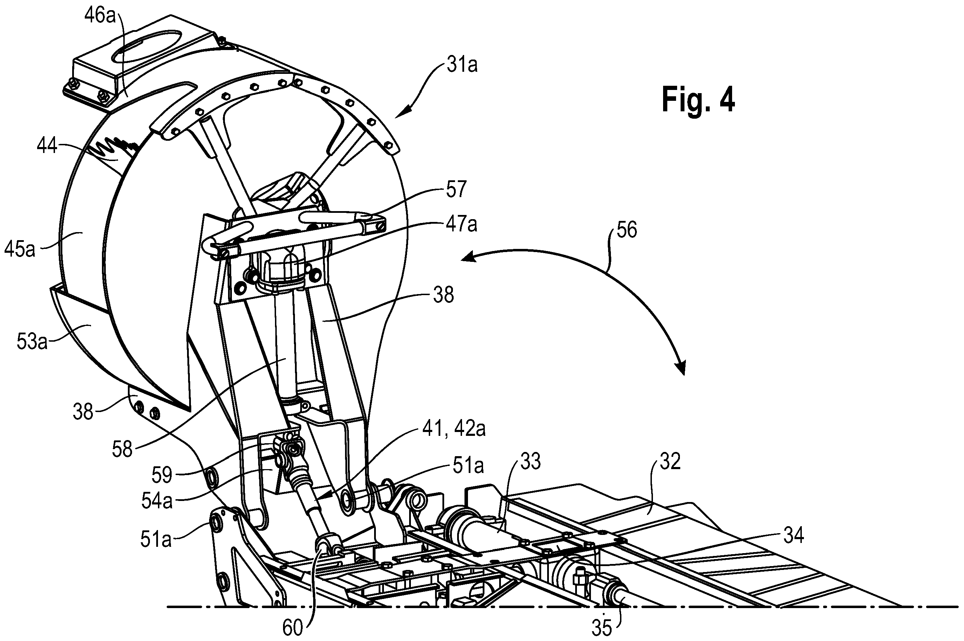

In Fig. 4 ist eine Teilansicht der Verteilvorrichtung 24 in einer weiteren Betriebsposition, der Schwadablageposition, dargestellt. In dieser Betriebsposition sind die Verteileinrichtungen 31a, 31b mittels der in eine zu den sich in der Horizontalen befindlichen Fördereinrichtungen 30a, 30b im Wesentlichen vertikal stehende Stellung überführt. Der Schwenkwinkel 56 beträgt dann etwa 90°. In der Schwadablageposition nimmt die Verteilvorrichtung 24 eine zur Häckselvorrichtung 23 nach unten geneigte Position ein, um das von dem Hordenschüttler 4 abgegebene Stroh 22 unter Umgehung der Häckselvorrichtung 23 entlang der Oberseite der Verteilvorrichtung 24 auf den Boden gleiten zu lassen. Wie aus der Darstellung ersichtlich ist, steht die Verteileinrichtung 31a in dieser weiteren Betriebsposition durch die Gelenkwelle 42a mit der dritten Abtriebswelle 40a durch ein Kreuzgelenk 59 in Verbindung. Ein weiteres Kreuzgelenk 60 verbindet das andere Ende der Gelenkwelle 42a mit einer Antriebswelle 58, welche in das Getriebe 47a mündet. Um den Antriebsstrang zwischen den Fördereinrichtungen 30a, 30b und den Verteileinrichtungen 31a, 31b nicht unterbrechen zu müssen, sind die dritte Abtriebswelle 40a sowie die Antriebswelle 58 mit der Gelenkwelle 42a mittels der Kreuzgelenke 59, 60 verbunden. Die Aufrechterhaltung der Verbindung ist vorteilhaft, um bei einem Überführen der Verteileinrichtungen 31a, 31b von der Häckselposition in die Schwablageposition ein Nachlaufen der Läufer 43a, 43b zu vermeiden und damit verbundene Verletzungsgefahren zu minimieren. Durch die unterbrechungsfreie Verbindung mittels der Gelenkwellen 42a, 42b zwischen den Verteileinrichtungen 31a, 31b und dem Antriebsstrang der Verteilvorrichtung 24 weisen die Verteileinrichtungen 31a, 31b stets einen definierten Betriebszustand auf. Im Fall der Schwadablageposition sind die Verteileinrichtungen 31a und 31b, wie auch die Fördereinrichtungen 30a und 30b, durch die Betätigung der Bremseinrichtung 37 stillgesetzt.

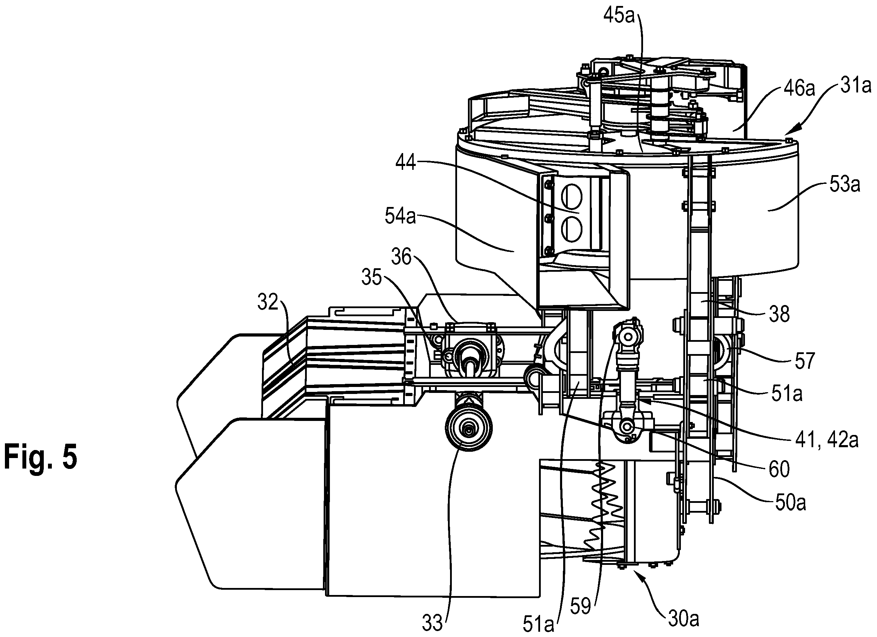

Fig. 5 zeigt eine Teilansicht der Verteilvorrichtung 24 in ihrer Transportposition. In der Transportposition der Verteilvorrichtung 24 nimmt die jeweilige Verteileinrichtung 31a, 31b eine parallele oder nahezu parallele Anordnung zu der jeweiligen Fördereinrichtung 30a, 30b ein. Auf diese Weise ist gewährleistet, dass die zulässige Breite des Mähdreschers 1 für einen Betrieb auf der Straße eingehalten wird. Hierzu wird die jeweilige Verteileinrichtung 31a, 31b um einen Schwenkwinkel 56 von größer 170°, insbesondere 180°, in Richtung der Längsachse des Mähdreschers 1 eingeschwenkt, so dass die Außenseite der jeweiligen Verteileinrichtung 31a, 31b einander zugewandt positioniert sind. In der dargestellten Ausführungsform ist jeweils ein Tragbügel 57 vorgesehen, mit dem sich die jeweilige Verteileinrichtung 31a, 31b in der Transportposition auf den Fördereinrichtungen 30a, 30b abstützt. Dadurch werden der Antriebsstrang sowie die Kreuzgelenke 59, 60 entlastet.

Der Mähdrescher 1 umfasst eine Steuerungsvorrichtung 52 zur Ansteuerung der Aktorik, um die jeweilige Verteileinrichtung 31a, 31b wechselweise zwischen den Betriebspositionen bei Feldfahrt, in welcher gehäckseltes Erntegut von der Verteilvorrichtung 24 über die Arbeitsbreite hinweg verteilt oder Stroh 22 unter Umgehung der Häckselvorrichtung 23 und der Verteilvorrichtung 24 ungehäckselt als Schwad auf dem Boden abgelegt wird, und der Transportposition bei Straßenfahrt zu überführen. Insbesondere kann das Überführen in die Transportposition mit einer Funktion des Mähdreschers 1 gekoppelt sein, welche durch einen so genannten Straßenfahrschalter aktivierbar ist. Somit lässt sich das Überführen der Verteileinrichtung 31a, 31b in die Transportstellung automatisieren.

**Bezugszeichenliste**

| | | | |
|---|---|---|---|
| 1 | Mähdrescher | 31a | Verteileinrichtung |
| 2 | Dreschwerk | 31b | Verteileinrichtung |
| 3 | Abscheideorgan | 32 | Rahmen |
| 4 | Hordenschüttler | 33 | Abtriebswelle |
| 5 | Reinigungseinrichtung | 34 | Erste Getriebestufe |
| 6 | Untersieb | 34a | Zweite Abtriebswelle |
| 7 | Obersieb | 35 | Gelenkwelle |
| 8 | Reinigungsgebläse | 36 | Zweite Getriebestufe |
| 9 | Erntegut | 37 | Bremseinrichtung |
| 10 | Schneidwerk | 38 | Tragarm |
| 11 | Schrägförderer | 39 | Dritte Getriebestufe |
| 12 | Maschinengehäuse | 40a | Dritte Abtriebswelle |
| 13 | Korn-Spreu-Gemisch | 40b | Dritte Abtriebswelle |
| 14 | Dresch- und Abscheidekorb | 41 | Kraftübertragungsmittel |
| 15 | Vorbereitungsboden | 42a | Gelenkwelle |
| 16 | Körner | 42b | Gelenkwelle |
| 17 | Halmteile | 43a | Läufer |
| 18 | Spreu | 43b | Läufer |
| 19 | Wendetrommel | 44 | Förderelemente |
| 20 | Gutstrom | 45a | Scheibe |
| 21 | Rücklaufboden | 45b | Scheibe |
| 22 | Stroh | 46a | Streubleche |
| 23 | Häckselvorrichtung | 46b | Streubleche |
| 24 | Verteilvorrichtung | 47a | Getriebe |
| 25 | Häckseltrommel | 47b | Getriebe |
| 26 | Häckslergehäuse | 48 | Aktorik |
| 27 | Messer | 49a | Hydraulikzylinder |
| 28 | Gegenmesser | 49b | Hydraulikzylinder |
| 29 | Gutstrom | 50a | Hebelanordnung |
| 30a | Fördereinrichtung | 50b | Hebelanordnung |
| 30b | Fördereinrichtung | 51a | Schwenkachse |
| 51b | Schwenkachse | | |
| 52 | Steuerungsvorrichtung | | |
| 53a | Mantelfläche | | |
| 53a | Mantelfläche | | |
| 54b | Kanalabschnitt | | |
| 54b | Kanalabschnitt | | |
| 55 | Schwenkrichtung | | |
| 56 | Schwenkwinkel | | |
| 57 | Tragbügel | | |
| 58 | Antriebswelle | | |
| 59 | Kreuzgelenk | | |
| 60 | Kreuzgelenk | | |

## Patentansprüche

1. Mähdrescher (1) mit einer Häckselvorrichtung (23) und einer dieser nachgeordneten, durch zumindest einen Antriebsstrang angetriebenen, Verteilvorrichtung (24), welche rotierend angetriebene Förderelemente (30a, 30b) umfasst, die einen aus der Häckselvorrichtung (23) austretenden Erntegutstrom (29) annehmen und umlenken, um den Erntegutstrom (29) einer dem jeweiligen Förderelement (30a, 30b) nachgeordneten, mittels einer Aktorik (48) um eine zur Längsachse des Mähdreschers parallele Schwenkachse (51a, 51b) verschwenkbaren Verteileinrichtung (31a, 31b) zuzuführen, wobei die Verteileinrichtungen (31a, 31b) durch Schwenken um ihre Schwenkachse (51a, 51b) aus zumindest einer Betriebsposition in eine Transportposition und umgekehrt überführbar sind, wobei die Verteileinrichtungen (31a, 31b) in der Transportposition eine parallele oder nahezu parallele Anordnung zum jeweiligen Förderelement (30a, 30b) einnehmen **dadurch gekennzeichnet, dass** die jeweilige Verteileinrichtung (31a, 31b) um einen Schwenkwinkel (56) von größer 170° in Richtung der Längsachse des Mähdreschers (1) schwenkbar ist.

2. Mähdrescher (1) nach Anspruch 1, **dadurch gekennzeichnet, dass** der Antriebsstrang der Verteilvorrichtung (31a, 31b) in Transportposition der Verteileinrichtungen (31a, 31b) verbunden bleibt.

3. Mähdrescher (1) nach einem der vorangehenden Ansprüche, **dadurch gekennzeichnet, dass** der Antriebsstrang zumindest zwischen dem jeweiligen Förderelement (30a, 30b) und der dieser jeweils nachgeordneten Verteileinrichtung (31a, 31b) mechanisch ausgebildet ist.

4. Mähdrescher (1) nach einem der vorangehenden Ansprüche, **dadurch gekennzeichnet, dass** in den Antriebsstrang der Verteilvorrichtung (24) zumindest zwischen dem jeweiligen Förderelement (30a, 30b) und der dieser nachgeordneten Verteileinrichtung (31a, 31b) ein Kraftübertragungsmittel (41) angeordnet ist, welches während des Überführens aus der zumindest einen Betriebsposition in die Transportposition und in der Transportposition eine Aufrechterhaltung des Kraftflusses bewirkt.

5. Mähdrescher (1) nach Anspruch 4, **dadurch gekennzeichnet, dass** das Kraftübertragungsmittel (41) als eine Gelenkwelle (42a, 42b) ausgebildet ist.

6. Mähdrescher (1) nach Anspruch 4, **dadurch gekennzeichnet, dass** das Kraftübertragungsmittel (41) als eine Fingerkupplung ausgebildet ist.

7. Mähdrescher (1) nach einem der vorangehenden Ansprüche, **dadurch gekennzeichnet, dass** zur wechselweisen Überführung zwischen der zumindest einen Betriebsposition und der Transportposition der jeweiligen Verteileinrichtung (31a, 31b) eine elektrisch, elektro-mechanisch oder hydraulisch betätigte Aktorik (48) vorgesehen ist.

8. Mähdrescher (1) nach einem der vorangehenden Ansprüche, **dadurch gekennzeichnet, dass** Steuerungsvorrichtung (52) vorgesehen ist, welche dazu eingerichtet ist, die Aktorik (48) in der Weise anzusteuern, dass die jeweilige Verteileinrichtung (31a, 31b) wechselweise zwischen der zumindest einen Betriebsposition und der Transportposition überführt wird.

9. Mähdrescher (1) nach einem der vorangehenden Ansprüche, **dadurch gekennzeichnet, dass** die Steuerungsvorrichtung (52) dazu eingerichtet ist, die Aktorik derart anzusteuern, dass die jeweilige Verteileinrichtung (31a, 31b) in eine Schwadablageposition überführt wird.

## Claims

1. A combine harvester (1) comprising a chopping device (23) and a distribution apparatus (24) which is arranged downstream of the chopping device and which is driven by at least one drive train and which includes rotatingly driven conveyor elements (30a, 30b) which receive a flow of crop material (29) issuing from the chopping device (23) and deflect same in order to feed the flow of crop material (29) to a distribution device (31a, 31b) which is arranged downstream of the respective conveyor element (30a, 30b) and which is pivotable by means of an actuator (48) about a pivot axis (51a, 51b) parallel to the longitudinal axis of the combine harvester, wherein the distribution devices (31a, 31b) can be transferred from at least one operating position into a transport position and vice-versa by pivotal movement about their pivot axis (51a, 51b), wherein the distribution devices (31a, 31b) in the transport position occupy a parallel or almost parallel arrangement with respect to the respective conveyor element (30a, 30b), **characterised in that** the respective distribution device (31a, 31b) is pivotable through a pivot angle (56) of greater than 170° in the direction of the longitudinal axis of the combine harvester (1).

2. A combine harvester (1) according to claim 1 **characterised in that** the drive train of the distribution apparatus (31a, 31b) remains connected in the transport position of the distribution devices (31a, 31b).

3. A combine harvester (1) according to one of the preceding claims **characterised in that** the drive train is of a mechanical configuration at least between the respective conveyor element (30a, 30b) and the distribution device (31a, 31b) respectively disposed downstream thereof.

4. A combine harvester (1) according to one of the preceding claims **characterised in that** arranged in the drive train of the distribution apparatus (24) at least between the respective conveyor element (30a, 30b) and the distribution device (31a, 31b) arranged downstream thereof is a power transmission means (41) which implements maintenance of the flow of power during transfer from the at least one operating position into the transport position and in the transport position.

5. A combine harvester (1) according to claim 4 **characterised in that** the power transmission means (41) is in the form of a universal-joint shaft (42a, 42b).

6. A combine harvester (1) according to claim 4 **characterised in that** the power transmission means (41) is in the form of a finger clutch.

7. A combine harvester (1) according to one of the preceding claims **characterised in that** there is provided an electrically, electro-mechanically or hydraulically actuated actuator (48) for alternate transfer between the at least one operating position and the transport position of the respective distribution device (31a, 31b).

8. A combine harvester (1) according to one of the preceding claims **characterised in that** there is provided a control device (52) adapted to actuate the actuator (48) in such a way that the respective distribution device (31a, 31b) is transferred alternately between the at least one operating position and the transport position.

9. A combine harvester (1) according to one of the preceding claims **characterised in that** the control device (52) is adapted to actuate the actuator in such a way that the respective distribution device (31a, 31b) is transferred into a swath deposit position.

## Revendications

1. Moissonneuse-batteuse (1) comprenant un dispositif de hachage (23) et un dispositif d'épandage (24) qui est disposé à la suite de celui-ci, qui est entraîné par l'intermédiaire d'au moins une chaîne de transmission et qui inclut des éléments d'amenée entraînés en rotation (30a, 30b), lesquels reçoivent un flux de produit récolté (29) sortant du dispositif de hachage (23) et le dévient pour le diriger vers un équipement d'épandage (31a, 31b) disposé à la suite de l'élément d'amenée respectif (30a, 30b) et pivotable au moyen d'un ensemble actionneur (48) autour d'un axe de pivotement (51a, 51b) parallèle à l'axe longitudinal de la moissonneuse-batteuse, les dispositifs d'épandage (31a, 31b) pouvant être transférés depuis au moins une position de fonctionnement vers une position de transport et inversement en pivotant autour de leur axe de pivotement (51a, 51b), les dispositifs d'épandage (31a, 31b) adoptant, dans la position de transport, un agencement parallèle ou presque parallèle à l'élément d'amenée respectif (30a, 30b), **caractérisée en ce que** l'équipement d'épandage respectif (31a, 31b) est pivotant selon un angle de pivotement (56) supérieur à 170° en direction de l'axe longitudinal de la moissonneuse-batteuse (1).

2. Moissonneuse-batteuse (1) selon la revendication 1, **caractérisée en ce que**, dans la position de transport des dispositifs d'épandage (31a, 31b), la chaîne de transmission du dispositif d'épandage (31a, 31b) reste en prise.

3. Moissonneuse-batteuse (1) selon une des revendications précédentes, **caractérisée en ce que** la chaîne de transmission au moins entre l'élément d'amenée respectif (30a, 30b) et l'équipement d'épandage (31a, 31b) respectivement disposé à sa suite est de conception mécanique.

4. Moissonneuse-batteuse (1) selon une des revendications précédentes, **caractérisée en ce que** dans la chaîne de transmission du dispositif d'épandage (24), au moins entre l'élément d'amenée respectif (30a, 30b) et l'équipement d'épandage (31a, 31b) disposé à sa suite, est disposé un moyen de transmission de force (41) qui, pendant le transfert depuis la au moins une position de fonctionnement vers la position de transport et dans la position de transport, assure un maintien du flux de force.

5. Moissonneuse-batteuse (1) selon la revendication 4, **caractérisée en ce que** le moyen de transmission de force (41) est conformé en arbre articulé (42a, 42b) .

6. Moissonneuse-batteuse (1) selon la revendication 4, **caractérisée en ce que** le moyen de transmission de force (41) est conformé en accouplement par doigts.

7. Moissonneuse-batteuse (1) selon une des revendications précédentes, **caractérisée en ce que**, pour un transfert alterné entre la au moins une position de fonctionnement et la position de transport de l'équipement d'épandage respectif (31a, 31b), il est prévu un ensemble actionneur (48) à action électrique, électromécanique ou hydraulique.

8. Moissonneuse-batteuse (1) selon une des revendications précédentes, **caractérisée en ce qu'**il est prévu un dispositif de commande (52) qui est agencé pour commander l'ensemble actionneur (48) de façon que l'équipement d'épandage respectif (31a, 31b) soit transféré alternativement entre la au moins une position de fonctionnement et la position de transport.

9. Moissonneuse-batteuse (1) selon une des revendications précédentes, **caractérisé en ce que** le dispositif de commande (52) est agencé pour commander l'ensemble actionneur de façon que l'équipement d'épandage respectif (31a, 31b) soit transféré dans une position d'andainage.
